# EUROPÄISCHE PATENTANMELDUNG

(11) **EP 1 152 213 A1**
(43) Veröffentlichungstag der Anmeldung: **07.11.2001**
(21) Anmeldenummer: 01000135.2
(22) Anmeldetag: 02.05.2001
(51) Int. Cl.: G01C 1/00, G01B 7/30

(54) **Anordnung zur Winkelmessung**

(30) Priorität: 06.05.2000 DE 10022175
(71) Anmelder: Philips Corporate Intellectual Property GmbH, 52064 Aachen (DE); Koninklijke Philips Electronics N.V., 5621 BA Eindhoven (NL)
(72) Erfinder: Dietmeyer, Klaus, Dr., Habsburgerallee 11, 52064 Aachen (DE)
(74) Vertreter: Volmer, Georg, Dipl.-Ing.

(57) **Zusammenfassung**

Bei einer Anordnung zur Winkelmessung mit einem Winkelsensor (1), der zwei relativ zueinander um 90 Grad phasenverschobene Sensorsignale liefert, deren Amplituden von der Temperatur abhängig sind, ist zur Generierung eines Fehlersignals vorgesehen dass in der Anordnung ein Temperatursensor (7) und ein Mikroprozessor (6) vorgesehen sind und dass der Mikroprozessor (6) in Abhängigkeit eines von dem Temperatursensor (7) gelieferten Temperaturwerts erwartete Amplitudenwerte der Sensorsignale berechnet, diese mit den tatsächlichen Amplitudenwerten der Sensorsignale vergleicht und dann, wenn die Abweichung zwischen den erwarteten und den tatsächlichen Amplitudenwerten einen vorgegebenen Grenzwert überschreitet, ein Fehlersignal erzeugt.

## Beschreibung

Die Erfindung betrifft eine Anordnung zur Winkelmessung mit einem Winkelsensor, der zwei relativ zueinander um 90 Grad phasenverschobene Sensorsignale liefert, deren Amplituden von der Temperatur abhängig sind Bei derartigen Anordnungen besteht im allgemeinen das Problem, dass die Sensorsignale, die der Winkelsensor liefert, bezüglich ihrer Amplitude stark temperaturabhängig sind.

Aus der US-PS 4,739,560 ist eine Anordnung mit einem Azimuthsensor bekannt, bei welcher die Sensorsignale bezüglich ihrer Amplitude in Abhängigkeit der Temperatur korrigiert werden. Das heißt es wird die Temperatur festgestellt und die infolge dieser Temperatur erwartete Amplitudenänderung der Amplituden der Sensorsignale ausgeglichen.

Es ist Aufgabe der Erfindung die Anordnung der eingangs genannten Art dahingehend weiterzuentwickeln, dass eine Überwachung der einwandfreien Arbeitsweise der Anordnung möglich ist.

Diese Aufgabe ist dadurch gelöst, dass in der Anordnung ein Temperatursensor und ein Mikroprozessor vorgesehen sind und dass der Mikroprozessor in Abhängigkeit eines von dem Temperatursensor gelieferten Temperaturwerts erwartete Amplitudenwerte der Sensorsignale berechnet, diese mit den tatsächlichen Amplitudenwerten der Sensorsignale vergleicht und dann, wenn die Abweichung zwischen den erwarteten und den tatsächlichen Amplitudenwerten einen vorgegebenen Grenzwert überschreitet, ein Fehlersignal erzeugt.

Dem Mikroprozessor, der die Sensorsignale auswertet, ist ein Temperatursensor zugeordnet. Der Temperatursensor liefert in Abhängigkeit der Temperatur ein Temperatursignal. Wiederum in Abhängigkeit dieses Temperatursignals ist der Mikroprozessor in der Lage zu bestimmen, welche Amplituden die Sensorsignale bei der gegebenen Temperatur haben sollten, da die Abhängigkeit der Amplitudenschwankungen der Sensorsignale von der Temperatur bekannt ist.

Der Mikroprozessor kann also vorherbestimmen, welche Amplituden die Sensorsignale, die von dem Winkelsensor geliefert werden, bei der gegebenen Temperatur haben sollten. Diese erwarteten Amplituden werden mit den tatsächlich festgestellten Amplituden der Sensorsignale verglichen. Wenn die Differenz dieser Signale einen vorgegebenen Grenzwert überschreitet, deutet dies darauf hin, dass eine Fehlersituation vorliegt. In diesem Falle erzeugt die Anordnung ein Fehlersignal, das beispielsweise in nachgeschalteten Schaltungsanordnungen dazu eingesetzt werden kann, die Auswertung der Sensorsignale zu unterdrücken. Somit ist eine Überwachung der einwandfreien Arbeitsweise der Anordnung einschließlich Winkelsensor möglich.

Der Vergleich der tatsächlichen und der erwarteten Amplitudenwerte der Sensorsignale kann am einfachsten, wie gemäß einer Ausgestaltung der Erfindung nach Anspruch 2 vorgesehen ist, durch Vergleich der maximalen Amplituden beider Signale vorgenommen werden.

Ist der Mikroprozessor, wie gemäß einer weiteren Allsgestaltung der Erfindung nach Anspruch 3 vorgesehen, ohnehin so ausgelegt, dass er zur Berechnung eines Winkels den sogenannten CORDIC-Algorithmus einsetzt, so kann die innerhalb des CORDIC-Algorithmus ohnehin vorgesehene Radius-Bestimmung auch gleichseitig zur Bestimmung der Maximalwerte der tatsächlichen, aktuellen Amplitudenwerte eingesetzt werden. Der CORDIC-Algorithmus als solcher ist beispielsweise aus "Digitale Signalverarbeitung in der Nachrichtenübertragung" von Gerdsen und Kröger, Seiten 108 bis 115 bekannt. Die Berechnung der erwarteten Amplitudenwerte in Abhängigkeit der Temperatur erfolgt mittels einer analytischen Funktion.

Die Signale, die der Winkelsensor liefert, können gegebenenfalls umgewandelt werden, so können sie beispielsweise, wie gemäß einer weiteren Ausgestaltung der Erfindung nach Anspruch 4 vorgesehen ist, von differentiellen Signalen in asymmetrische Signale umgewandelt werden. Ferner können sie von analogen Signalen in digitale Signale umgesetzt werden. Auch weitere Umwandlungen sind denkbar; in jedem Falle ergeben sich für die Eingangssignale des Mikroprozessors Amplitudenwerte der Sensorsignale, die von der Temperatur abhängig sind.

Die Art der Temperaturabhängigkeit kann gegebenenfalls, wie gemäß Anspruch 5 vorgesehen ist, in einem EEPROM abgespeichert sein und von dem Mikroprozessor zur Bestimmung der erwarteten Amplitudenwerte eingesetzt werden.
Liefert der Temperatursensor beispielsweise ein analoges Signal, so wird dieses mittels eines Analog-Digital-Umsetzers in den digitalen Bereich umgesetzt und dem Mikroprozessor zugeführt, damit dieser das Signal auswerten kann. Wird in einer solchen Konstellation, wie gemäß einer weiteren Ausgestaltung der Erfindung nach Anspruch 7 vorgesehen, zusätzlich ein Multiplexer vorgesehen, so besteht die Möglichkeit das analoge Ausgangssignal der Schaltungsanordnung zeitweise mittels des Analog-Digital-Umsetzers wieder in ein digitales Signal rückzuwandeln und wiederum dem Mikroprozessor zuzuführen. Damit wird es möglich, das analoge Ausgangssignal der Schaltungsanordnung zu kontrollieren. Durch diese Rückkopplung kann der Mikroprozessor ständig überprüfen, ob das Ausgangssignal tatsächlich den von ihm gelieferten Werten entspricht. Damit ist eine zusätzliche Fehlerkontrolle möglich.

Nachfolgend wird ein Ausführungsbeispiel der Erfindung anhand der Zeichnung näher erläutert. Es zeigen:
Fig 1 ein Blockschaltbild einer erfindungsgemäßen Anordnung zur Winkelmessung,
Fig. 2 ein Darstellung der von dem Winkelsensor gemäß Fig 1 gelieferten Sensorsignale und
Fig 3 eine schematische Darstellung des Vergleichs der erwarteten und der tatsächlichen Amplitudenwerte des Winkelsensors.

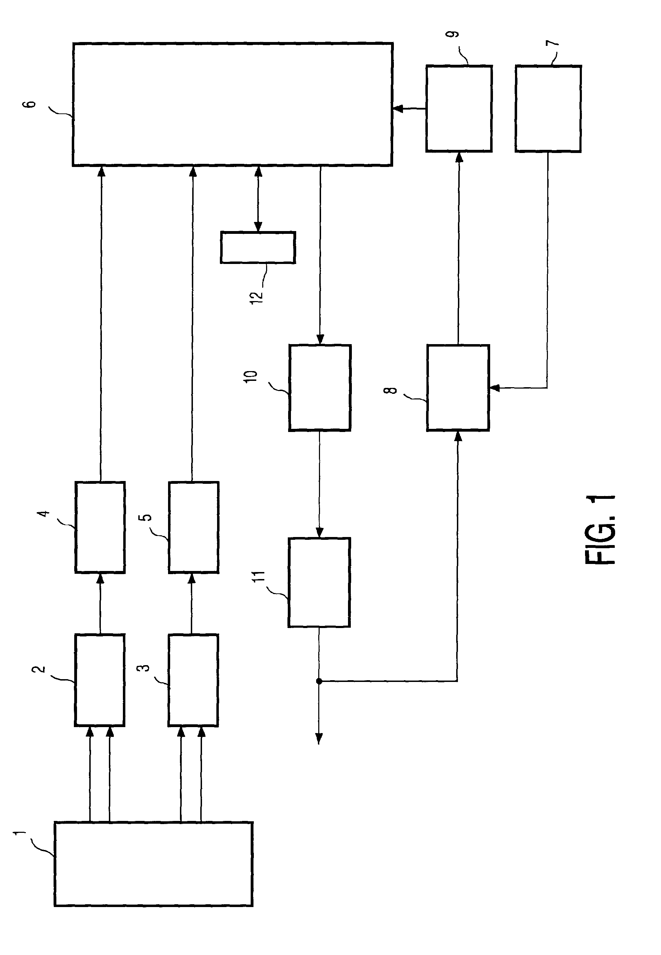

Fig 1 zeigt ein Blockschaltbild einer erfindungsgemäßen Anordnung zur Winkelmessung mit einem Winkelsensor 1, der zwei relativ zueinander um 90° phasenverschobene Sensorsignale liefert. Diese Sensorsignale liegen in differentieller symmetrischer Form vor und werden jeweils einem Wandler 2 bzw. 3 zugeführt, in welchem die Signale in asymmetrische Signale umgewandelt werden. Nach Umwandlung in asymmetrische Signale liegen diese immer noch in analoger Form vor und werden jeweils mittels eines Analog-DigitalUmsetzers 4 bzw. 5 in digitale Signale umgesetzt, welche einem Mikroprozessor 6 zugeführt werden. Der Mikroprozessor 6 ist in an sich bekannter Weise in der Lage, aus den beiden um 90° zueinander verschobenen Phasensignalen eine Winkelberechnung vorzunehmen, beispielsweise mittels des CORDIC-Algorithmus. Der Mikroprozessor 6 liefert ein entsprechendes Winkelsignal, das mittels eines Digital-Analog-Umsetzers 10 in ein analoges Signal umgewandelt wird. Es ist ein Ausgangsverstärker 11 vorgesehen, der das analoge Winkelsignal nachgeschalteten Schaltungsanordnungen zur Verfügung stellt.

Die Amplitude der Sensorsignale weist jedoch leider eine deutliche Temperaturabhängigkeit auf. In der erfindungsgemäßen Schaltungsanordnung wird diese Temperarurabhängigkeit der Sensorsignale dazu eingesetzt, die einwandfreie Arbeitsweise der Schaltungsanordnung zu überprüfen.

Dazu ist ein Temperatursensor 7 vorgesehen, dessen analoges Ausgangssignal über einen Multiplexer 8 einem Analog-Digital-Umsetzer 9 zugeführt wird, dessen Ausgangssignal wiederum auf den Mikroprozessor 6 gekoppelt ist. Der Mikroprozessor 6 erhält somit ein Signal, welches ihm eine Information über die vorliegende Temperatur gibt.

Es ist ferner ein EEPROM 12 vorgesehen, in welchem die Art der Abhängigkeit zwischen der Temperatur und der Amplitude der Sensorsignale abgespeichert ist.

Der Mikroprozessor 6 bestimmt aus der tatsächlich vorliegenden Temperatur nun diejenigen Amplitudenwerte der Sensorsignale, die bei der vorliegenden Temperatur zu erwarten sind. Dabei kann unter Berücksichtigung der Phasenlagen der Signale ein Vergleich der momentanen Amplituden der Signale vorgenommen werden. Wesentlich einfacher und ohne Einschränkungen hinsichtlich der Funktion kann jedoch ein Vergleich der Maximalwerte der Signale vorgenommen werden.

In der Anordnung dieses Ausführungsbeispiels berechnet der Mikroprozessor mittels des CORDIC-Algorithmus das Winkelsignal. Da in dem CORDIC-Algorithmus ohnehin eine Radius Berechnung der beiden Sensorsignale vorgenommen wird, liegt somit auch der Maximalwert der tatsächlichen Sensorsignale vor. Der Mikroprozessor 6 vergleicht diesen mit dem Maximalwert der erwarteten Amplitudenwerte der Sensorsignale, den er in Abhängigkeit des ihm zugerührten Temperatursignals berechnet. Bei diesem einfachen Vergleich kann sich eine Abweichung der Maximalwerte der tatsächlich vorliegenden Amplitudenwerte und der der erwarteten Amplitudenwerte ergeben. Überschreitet diese Abweichung einen vorgegebenen Grenzwert, so weichen die Maximalwerte der tatsächlichen Amplitudenwerte der Sensorsignale relativ stark von den Maximalwerten der erwarteten Amplitudenwerten ab und es kann davon ausgegangen werden, dass eine Fehlersituation vorliegt, dass also wenigstens eines der Signale gestört unterbrochen ist oder Ähnliches. In diesem Falle liefert der Mikroprozessor 6 ein Fehlersignal, welches beispielsweise gegebenenfalls nachgeschalteten und in der Figur nicht dargestellten Schaltungsanordnungen eine Fehlersituation signalisiert.

Das Ausrührungsbeispiel der erfindungsgemäßen Schaltungsanordnung gemäß Fig. 1 enthält darüber hinaus eine weitere Fehlerüberprüfung, die mit geringem Aufwand möglich wird, da für die Analog-Digital-Umsetzung des analogen Ausgangssignals des Temperatursensors 7 ohnehin ein Analog-Digital-Umsetzer 9 vorgesehen ist. Es wird nämlich mittels des Multiplexers 8 zeitweise das analoge Ausgangssignal der Verstärkerstufe 11 über den Multiplexer 8 und den Analog-Digital-Umsetzer 9 wieder auf den Mikroprozessor 6 rückgekoppelt. Dieses Signal sollte in etwa dem Signal entsprechen, das der Mikroprozessor 6 als Winkelsignal an den Digital-Analog-Umsetzer 10 liefert. Durch Vergleich dieser beiden Signale kann der Mikroprozessor 6 erkennen, ob in der Ausgangsstufe, die insbesondere durch den Digital-Analog-Umsetzer 10 und den Verstärker 11 gebildet wird, ein Fehler vorliegt. Auch in diesem Falle kann an nachgeschaltete, in der Figur nicht dargestellte Schaltungsanordnungen ein Fehlersignal gegeben werden.

Im Ergebnis ist die erfindungsgemäße Schaltungsanordnung dazu in der Lage, eine laufende Überprüfung der Amplituden der Sensorsignale vorzunehmen, wobei auch die Temperaturabhängigkeit berücksichtigt werden kann. Es kann somit eine Fehlersituation sofort erkannt werden.

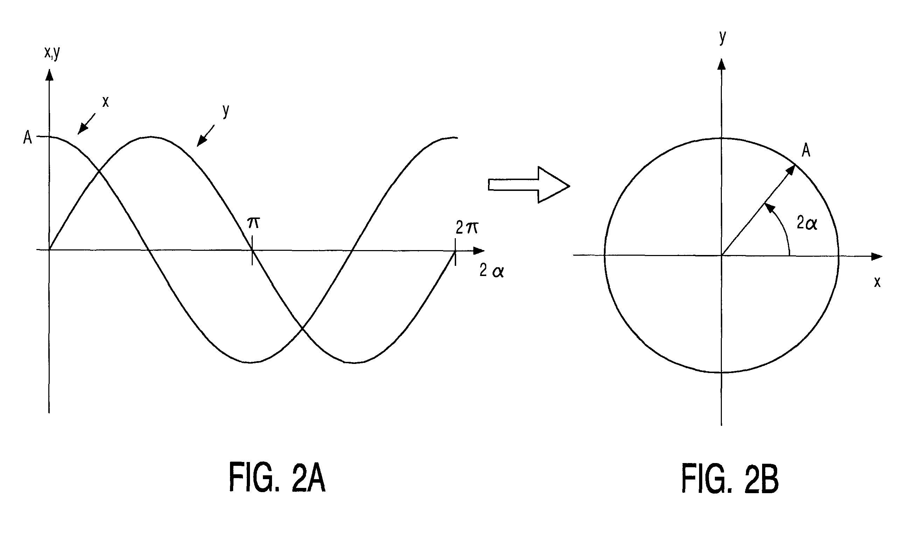

In Fig. 2 sind die beiden Sensorsignale x und y dargestellt. Es handelt sich in etwa um sinus/kosinusförmige Signale, die relativ zueinander eine Phasenverschiebung von 90° aufweisen. Die Darstellung A der Fig. 2 zeigt diese beiden Signale über einem Winkel von 2π aufgetragen. Überträgt man diese Signale für jeden möglichen Winkel zwischen 0 und 2π in ein Koordinatensystem der Werte von x und y, so erhält man einen Kreis entsprechend der Darstellung gemäß Fig. 2B) Bereits aus dieser einfachen Umwandlung erhält man die maximale Amplitude A der beiden Signale sowie den für das Winkelsignal relevanten Winkel. Hierbei handelt es sich um eine Möglichkeit der Bestimmung der Amplitudenwerte der Sensorsignale, wobei bei dieser Methode für beide Sensorsignale ein maximaler Amplitudenwert bestimmt wird, der dauernd vorliegt.

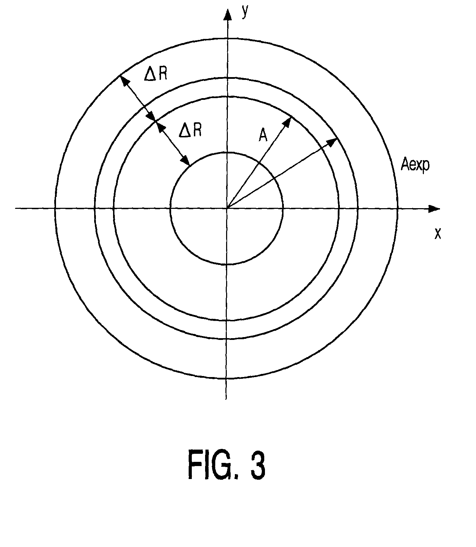

In Fig. 3 ist in schematischer Weise dargestellt, wie dieser so gewonnene maximale Amplitudenwert A der tatsächlichen Sensorsignale ebenfalls in einem x,y-Koordinatensystem mit den erwarteten Amplitudenwerten verglichen werden kann. Wird für die erwartenen Sensorsignale in entsprechende Weise ein maximaler Amplitudenwert Aexp berechnet, so sollte dieser in einem Bereich +ΔR, -ΔR um den Wert A liegen. Dabei handelt es sich um den oben erläuterten vorgegebenen Grenzwert, der durch die Differenz der Werte A und Aexp nicht überschritten werden darf. Wird dieser doch überschritten, so liegt mit großer Wahrscheinlichkeit eine Fehlersituation vor, in welcher wenigstens eines der Sensorsignale gestört oder unterbrochen ist. Dann liefert in der Anordnung gemäß Fig. 1 der MikroProzessor ein Fehlersignal.

## Patentansprüche

1. Anordnung zur Winkelmessung mit einem Winkelsensor (1), der zwei relativ zueinander um 90 Grad phasenverschobene Sensorsignale liefert, deren Amplituden von der Temperatur abhängig sind,
**dadurch gekennzeichnet,**
**dass** in der Anordnung ein Temperatursensor (7) und ein Mikroprozessor (6) vorgesehen sind und dass der Mikroprozessor (6) in Abhängigkeit eines von dem Temperatursensor (7) gelieferten Temperaturwerts erwartete Amplitudenwerte der Sensorsignale berechnet, diese mit den tatsächlichen Amplitudenwrten der Sensorsignale vergleicht und dann, wenn die Abweichung zwischen den erwarteten und den tatsächlichen Amplitudenwerten einen vorgegebenen Grenzwert überschreitet, ein Fehlersignal erzeugt.

2. Anordnung nach Anspruch 1,
**dadurch gekennzeichnet,**
**dass** der Mikroprozessor (6) den Maximalwert der tatsächlichen Amplitudenwerten Sensorsignale berechnet und diesen mit dem Maximalwert der tatsächlichen Amplitudenwerte vergleicht.

3. Anordnung nach Anspruch 1 und 2,
**dadurch gekennzeichnet,**
**dass** der Mikroprozessor (6) zur Berechnung eines Winkels aus den Sensorsignalen einen CORDIC-Algorithmus einsetzt und die in dem CORDIC-Algorithmus ohnehin vorgesehene Radius-Bestimmung auch für die Bestimmung des Maximalwerts der berechneten Amplitudenwerte einsetzt.

4. Anordnung nach Anspruch 1 oder 2,
**dadurch gekennzeichnet,**
**dass** der Winkelsensor (1) zwei symmetrische, differentielle Signale liefert, die nach Umwandlung in asymmetrische Signale einem ersten und einem zweiten Analog-Digital-Umsetzer (4,5) zugeführt werden, deren Ausgangssignale auf den Mikroprozessor (6) gekoppelt werden.

5. Anordnung nach Anspruch 1 oder 2,
**dadurch gekennzeichnet,**
**dass** die Werte der Temperaturabhängigkeit der Sensorsignale in einem EEPROM (12) gespeichert sind, auf das der Mikroprozessor (6) zur Berechnung der erwarteten Amplituden der Sensorsignale zugreift.

6. Anordnung nach Anspruch 1 oder 2,
**dadurch gekennzeichnet,**
**dass** der Temperatursensor (7) ein analoges Signal liefert, welches mittels eines dritten Analog-Digital-Umsetzers (9) in ein digitales Signal umgesetzt und auf den Mikroprozessor gekoppelt wird

7. Anordnung nach Anspruch 1 oder 2,
**dadurch gekennzeichnet,**
**dass** der Mikroprozessor (6) ein den berechneten Winkel angebendes Winkelsignal liefert, welches mittels eines Digital-Analog- Umsetzers (10) in ein analoges Winkelsignal umgesetzt wird, dass ein Multiplexer (8) vorgesehen ist, auf dessen ersten Eingang das analoge Winkelsignal und auf dessen zweiten Eingang das Ausgangssignal des Temperatursensors (7) gekoppelt sind und dem ein dritter Analog-Digital-Umsetzer (9) nachgeschaltet ist, dessen Ausgangssignal auf den Mikroprozessor gekoppelt ist, und dass der Mikroprozessor (6) den Multiplexer (8) zur Bestimmung der erwarteten Amplitudenwerte der Sensorsignale auf dessen zweiten Eingang und zur Überprüfung des den berechneten Winkel angebenden Ausgangssignals auf dessen ersten Eingang schaltet.
